# EUROPEAN PATENT APPLICATION

(11) **EP 4 679 220 A1**
(43) Date of publication of application: **14.01.2026**
(21) Application number: 24791801.4
(22) Date of filing: 20.03.2024
(51) Int. Cl.: G05D 1/43, G05D 1/622

(54) **OBSTACLE AVOIDANCE CONTROL METHOD AND APPARATUS FOR MOBILE ROBOT, DEVICE, SYSTEM, AND MEDIUM**

(30) Priority: 21.04.2023 CN 202310460122
(71) Applicant: Hai Robotics Co., Ltd., Shenzhen, Guangdong 518000 (CN)
(72) Inventor: XIA, Peng, Shenzhen, Guangdong 518000 (CN); LI, Hong, Shenzhen, Guangdong 518000 (CN); LI, Huixiang, Shenzhen, Guangdong 518000 (CN)
(74) Representative: Gulde & Partner
(86) International application number: PCT/CN2024/082750
(87) International publication number: WO 2024/217214

(57) **Abstract**

This application relates to an obstacle avoidance control method and apparatus for a mobile robot, an apparatus, a system, and a medium. The method includes: determining a first distance between a mobile robot and a target obstacle in a walking direction of the mobile robot and a second distance between the mobile robot and a target point to be walked to in the walking direction; determining whether the first distance is greater than the second distance, and if yes, controlling the mobile robot to enter a non-obstacle avoidance state, to enable the mobile robot to walk, based on a non-obstacle avoidance walking strategy, to the target point to be walked to and then stop; or if not, controlling the mobile robot to enter an obstacle avoidance state, and controlling, based on an obstacle avoidance walking strategy, the mobile robot to walk to a target location spaced from the target obstacle by a preset safety distance and then stop. By means of this application, the collision risks of the mobile robot are reduced, and the walking safety of the mobile robot is improved.

## Description

### CROSS-REFERENCES

This application claims priority to Chinese Patent Application No. 202310460122.8, filed with the China National Intellectual Property Administration on April 21, 2023 and entitled "OBSTACLE AVOIDANCE CONTROL METHOD AND APPARATUS FOR MOBILE ROBOT, DEVICE, SYSTEM, AND MEDIUM", which is incorporated herein by reference in its entirety.

### TECHNICAL FIELD

This application relates to the field of intelligent robot technologies, and in particular, to an obstacle avoidance control method and apparatus for a mobile robot, an apparatus, a system, and a medium.

### BACKGROUND OF THE INVENTION

With the development of artificial intelligence, applications of mobile robots in various industries also have gradually matured. By describing in terms of intelligent warehousing, the mobile robots play an important role in a process of carrying goods. In a specific application process, the mobile robots may be applied to a following walking scenario of performing a carrying task. For example, in a manual sorting work area, the mobile robots need to queue up at corresponding target points in sequence, and then walk to next target points after the sorting is completed.

However, for the foregoing scenario, there is a requirement for obstacle avoidance safety, that is, in the whole walking process, a rear vehicle does not hit a front vehicle, so as to avoid faults of or damage to robots due to a collision. To implement the requirement, a common method used includes configuring an obstacle avoidance function for the mobile robots, so as to select to enable or disable the obstacle avoidance function of the mobile robots based on a current area where the mobile robots are located. For example, the obstacle avoidance function is enabled in a sorting area, the obstacle avoidance function is disabled in a non-sorting area, and then following walking is implemented by controlling the mobile robots to start.

However, a safety problem is prone to occur for the method of controlling the obstacle avoidance function to be enabled or disabled based on areas, and there is a risk that a rear vehicle hits a front vehicle by a particular probability.

### SUMMARY OF THE INVENTION

To overcome the problem in the related technologies, this application provides an obstacle avoidance control method and apparatus for a mobile robot, a device, a system, and a medium, to reduce risks that the mobile robots collides, and improve the walking safety of the mobile robot.

A first aspect of this application provides an obstacle avoidance control method for a mobile robot, applied to a management device, the method including:
determining a first distance between a mobile robot and a target obstacle in a walking direction of the mobile robot and a second distance between the mobile robot and a target point to be walked to in the walking direction;
determining whether the first distance is greater than the second distance, and if yes, controlling the mobile robot to enter a non-obstacle avoidance state, to enable the mobile robot to walk, based on a non-obstacle avoidance walking strategy, to the target point to be walked to and then stop; or
if not, controlling the mobile robot to enter an obstacle avoidance state, and controlling, based on an obstacle avoidance walking strategy, the mobile robot to walk to a target location spaced from the target obstacle by a preset safety distance and then stop.

In some embodiments, the method further includes:
generating a planned target point in the walking direction based on the first distance and the preset safety distance;
determining, every first specified time in a walking process of the mobile robot, whether a location change amount of the target obstacle reaches a preset change threshold, and if yes, updating the planned target point based on the currently determined first distance and the preset safety distance; and
correspondingly, the controlling, based on an obstacle avoidance walking strategy, the mobile robot to walk to a target location spaced from the target obstacle by a preset safety distance including:
   controlling, based on the obstacle avoidance walking strategy, the mobile robot to walk to the planned target point and then stop.

In some embodiments, the controlling the mobile robot to enter an obstacle avoidance state, and controlling, based on an obstacle avoidance walking strategy, the mobile robot to walk to the planned target point and then stop include:
controlling the mobile robot to enter a first obstacle avoidance state;
controlling, in the first obstacle avoidance state based on a first obstacle avoidance walking strategy, the mobile robot to walk to the planned target point, where in the first obstacle avoidance state, the mobile robot is in a state of walking in an accelerated manner and/or at a constant speed;
determining, every second specified time, whether the current state of the mobile robot meets a deceleration condition, and if yes, controlling the mobile robot to switch from the first obstacle avoidance state to a second obstacle avoidance state; and
controlling, in the second obstacle avoidance state based on a second obstacle avoidance walking strategy, the mobile robot to walk to the planned target point and then stop,
where in the second obstacle avoidance state, the mobile robot is in a decelerated walking state.

In some embodiments, the controlling, based on a first obstacle avoidance walking strategy, the mobile robot to walk to the planned target point includes:
controlling the mobile robot to walk to the planned target point by using a preset acceleration as a current acceleration, and determining whether the current acceleration reaches a preset maximum acceleration; and
if yes, keeping the mobile robot to walk at the current acceleration; or
if not, updating the current acceleration according to a preset first acceleration change rate hierarchy, where a maximum value of the current acceleration is the maximum acceleration.

In some embodiments, the method further includes:
in a process of keeping the mobile robot to walk at the current acceleration or updating the current acceleration according to the preset first acceleration change rate hierarchy, determining, in real time, whether a current speed of the mobile robot reaches a preset maximum speed; and
if yes, setting the current acceleration to zero, and controlling the mobile robot to walk at the maximum speed; or
if not, continuously keeping the mobile robot to walk at the current acceleration or continuously updating the current acceleration according to the preset first acceleration change rate hierarchy, until the current speed reaches the maximum speed, and setting the current acceleration to zero.

In some embodiments, the determining, every second specified time, whether the current state of the mobile robot meets a deceleration condition includes:
obtaining a speed parameter of the mobile robot every second specified time, where the speed parameter includes a current speed and a current acceleration;
calculating, based on a preset deceleration curve, a deceleration parameter, and the speed parameter, a third distance that the mobile robot needs to walk to decelerate from the current speed to zero;
obtaining a fourth distance between the mobile robot and the planned target point; and
determining whether the third distance is greater than or equal to the fourth distance, and if yes, determining that the current state of the mobile robot meets the deceleration condition, or if not, determining that the current state of the mobile robot does not meet the deceleration condition.

In some embodiments, the controlling, based on a second obstacle avoidance walking strategy, the mobile robot to walk to the planned target point and then stop includes:
generating a plan array based on the deceleration curve and the deceleration parameter, where the plan array is used for representing planned speeds and planned remaining distances to the planned target point at different moments; and
adjusting the current speed of the mobile robot in real time based on the plan array, to control the mobile robot to walk to the planned target point and then stop.

In some embodiments, the adjusting the current speed of the mobile robot in real time based on the plan array includes:
querying a planned remaining distance and a planned speed in the plan array at a current moment in real time, and obtaining an actual remaining distance of the mobile robot;
calculating a difference between the planned remaining distance and the actual remaining distance, where the actual remaining distance is a distance between the mobile robot and the planned target point at the current moment;
determining an adjustment speed based on at least the difference;
generating an obstacle avoidance speed based on the adjustment speed and the planned speed; and
controlling the mobile robot to walk by using the obstacle avoidance speed as the current speed.

A second aspect of this application provides an obstacle avoidance control method for a mobile robot, applied to the mobile robot, the method including:
walking, in a non-obstacle avoidance state based on a non-obstacle avoidance walking strategy, to a target point to be walked to; and
in an obstacle avoidance state, walking to a target location spaced from the target obstacle by a preset safety distance based on an obstacle avoidance walking strategy,
where the mobile robot is controlled by a management device, and the management device is configured to: obtain a first distance between the mobile robot and the target obstacle in a walking direction and a second distance between the mobile robot and a target point to be walked to in the walking direction, determine whether the first distance is greater than the second distance, and if yes, control the mobile robot to enter the non-obstacle avoidance state; or if not, control the mobile robot to enter the obstacle avoidance state.

A third aspect of this application provides an obstacle avoidance control apparatus for a mobile robot, applied to a management device, the apparatus including:
a distance obtaining unit, configured to determine a first distance between a mobile robot and a target obstacle in a walking direction of the mobile robot and a second distance between the mobile robot and a target point to be walked to in the walking direction;
a first determining unit, configured to determine whether the first distance is greater than the second distance;
a non-obstacle avoidance walking unit, configured to: when the first distance is greater than the second distance, control the mobile robot to enter a non-obstacle avoidance state, to enable the mobile robot to walk, based on a non-obstacle avoidance walking strategy, to the target point to be walked to; and
an obstacle avoidance walking unit, configured to: when the first distance is not greater than the second distance, control the mobile robot to enter an obstacle avoidance state, and control, based on an obstacle avoidance walking strategy, the mobile robot to walk to a target location spaced from the target obstacle by a preset safety distance and then stop.

A fourth aspect of this application provides a management device, including:
a processor; and
a memory, storing executable code, the executable code, when executed by the processor, causing the processor to perform the method according to any one of the foregoing aspects.

A fifth aspect of this application provides a mobile robot, including:
a processor; and
a memory, storing executable code, the executable code, when executed by the processor, causing the processor to perform the method according to the foregoing aspects.

A sixth aspect of this application provides an obstacle avoidance control system, including:
the management device described above; and
at least one mobile robot.

A seventh aspect of this application provides a non-transitory machine readable storage medium, storing executable code, the executable code, when executed by a processor of an electronic device, causing the processor to perform the method according to the foregoing aspects.

The technical solutions provided in this application may achieve the following beneficial effects:
In the embodiments of this application, a management device determines a first distance between a mobile robot and a target obstacle in a walking direction of the mobile robot and a second distance between the mobile robot and a target point to be walked to in the walking direction, controls the mobile robot to enter a non-obstacle avoidance state when the first distance is greater than the second distance, to enable the mobile robot to walk, based on a non-obstacle avoidance walking strategy, to the target point to be walked to and then stop, controls the mobile robot to enter an obstacle avoidance state when the first distance is not greater than the second distance, and controls, based on an obstacle avoidance walking strategy, the mobile robot to walk to a target location spaced from a target obstacle by a preset safety distance and then stop. In this way, by using a magnitude relationship between the first distance and the second distance, whether the mobile robot enters the obstacle avoidance state is controlled, so as to ensure that when there is a target obstacle between the mobile robot and the target point to be walked to, the mobile robot can stop at a location spaced from the target obstacle by the safety distance, thereby reducing the collision risks of the mobile robot and improving the walking safety of the mobile robot.

It is to be understood that, the foregoing general descriptions and the following detailed descriptions are merely for illustration and explanation purposes and are not intended to limit this application.

### BRIEF DESCRIPTION OF DRAWINGS

The foregoing and other objectives, features, and advantages of this application may become more apparent from the following detailed descriptions of exemplary implementations of this application with reference to the accompanying drawings. In the exemplary implementations of this application, the same reference numerals generally represent the same components.
FIG. 1 is a schematic flowchart of an obstacle avoidance control method for a mobile robot according to an embodiment of this application;
FIG. 2a is a schematic diagram of a relationship between a mobile robot and a target obstacle when a first distance is greater than a second distance according to an embodiment of this application;
FIG. 2b is a schematic diagram of a relationship between a mobile robot and a target obstacle when a first distance is less than a second distance according to an embodiment of this application;
FIG. 2c is a schematic diagram of a relationship between a mobile robot and a target obstacle when a first distance is equal to a second distance according to an embodiment of this application;
FIG. 2d is a schematic diagram of a relationship between a mobile robot and a target obstacle when a first distance is less than a second distance according to another embodiment of this application;
FIG. 3 is a schematic flowchart of a method for controlling a mobile robot to walk according to an embodiment of this application;
FIG. 4 is a schematic flowchart of a method for controlling a mobile robot to walk according to another embodiment of this application;
FIG. 5 is a schematic flowchart of a method for determining a deceleration condition according to an embodiment of this application;
FIG. 6 is a schematic flowchart of a method for controlling a mobile robot to walk according to another embodiment of this application;
FIG. 7 is a schematic flowchart of a method for adjusting a current speed of a mobile robot according to an embodiment of this application;
FIG. 8 is a schematic flowchart of an obstacle avoidance control method for a mobile robot according to an embodiment of this application; and
FIG. 9 is a schematic structural diagram of an obstacle avoidance control apparatus for a mobile robot according to an embodiment of this application.

### DETAILED DESCRIPTION

In the following, the exemplary embodiments of this application are described in detail with reference to the accompanying drawings. Although preferred implementations of this application are shown in the accompanying drawings, it should be understood that this application may be implemented in various forms and should not be limited to the implementations described herein. On the contrary, these implementations are provided to make this application more comprehensive and complete, and can completely convey the scope of this application to a person skilled in the art.

The terms used in this application are for the purpose of describing specific embodiments only and are not intended to limit this application. The singular forms of "a" and "the" used in this application and the appended claims are intended to include the plural forms as well, unless the context clearly indicates otherwise. It should be further understood that the term "and/or" used herein indicates and includes any or all possible combinations of one or more associated listed items.

It should be understood that although the terms such as "first," "second," and "third," may be used in this application to describe various information, the information should not be limited to these terms. These terms are merely used to distinguish between information of the same type. For example, without departing from the scope of this application, first information may alternatively be referred to as second information, and similarly, second information may alternatively be referred to as first information. Therefore, a feature limited by "first" or "second" may explicitly or implicitly include one or more of the features. In the descriptions of this application, "a plurality of" means two or more, unless otherwise definitely and specifically limited.

The following describes the technical solutions provided in the embodiments of this application in detail with reference to the accompanying drawings.

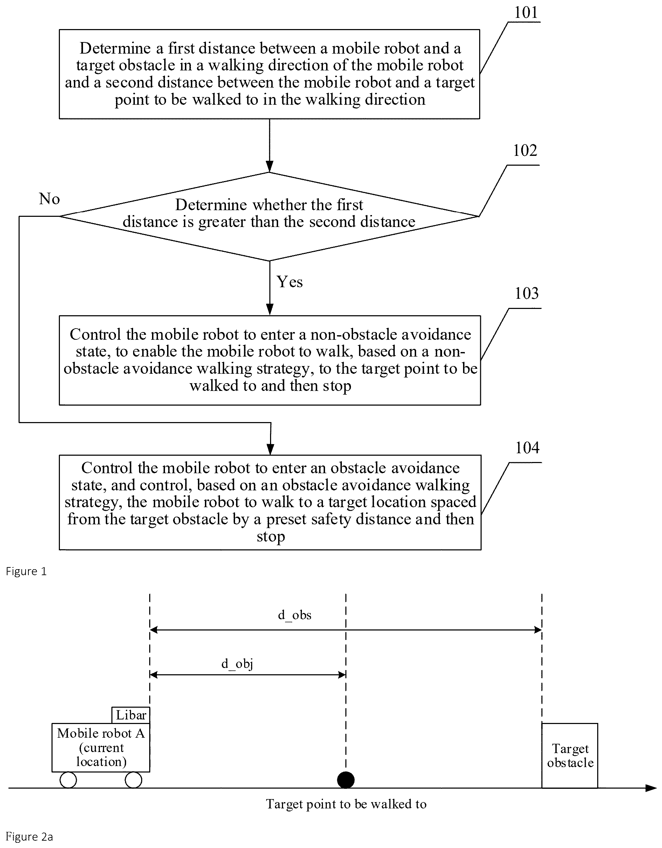

FIG. 1 is a schematic flowchart of an obstacle avoidance control method for a mobile robot according to an embodiment of this application. The method may be applied to a management device. Referring to FIG. 1, the method may include the following steps:
Step 101: Determine a first distance between a mobile robot and a target obstacle in a walking direction of the mobile robot and a second distance between the mobile robot and a target point to be walked to in the walking direction; and
the management device can control the mobile robot to walk through communication with the mobile robot. In this application, the management device can be connected to at least one mobile robot via a network, so as to implement controlling of the mobile robot by sending an instruction. The network may be a wired network or a wireless network, which is not specifically limited herein.

In some embodiments, when at least two mobile robots are in a following walking scenario, the management device may perform walking control on each mobile robot.

In this application, the mobile robot may be provided with a sensing device, to check whether there is an obstacle in an obstacle avoidance area. Optionally, the sensing device may be a lidar sensor, or certainly may be a sensor of another type, such as an ultrasonic sensor.

The sensing device disposed on the mobile robot may be configured to detect a target obstacle closest to the mobile robot in the walking direction of the mobile robot, to resolve the first distance between the mobile robot and the target obstacle. Moreover, to ensure sufficient safety of the mobile robot, the sensing device disposed on the mobile robot may be specifically configured to detect a target obstacle closest to a foremost edge of the mobile robot in the walking direction of the mobile robot, and resolve the first distance between the target obstacle and the foremost edge of the mobile robot.

It may be understood that, the target obstacle may be a static object, a moving object, or the like. The moving object may be in a stationary state or a moving state. For example, in a following walking scenario, for a mobile robot, the target obstacle in the walking direction of the mobile robot may be another mobile robot located in front.

The target point to be walked to is a target point on which the mobile robot needs to stay in a walking process. The management device plans at least one target point to be walked to for the mobile robot, and when the mobile robot walks, a target point to be walked to and closest to the mobile robot in the walking direction of the mobile robot, that is, a next target point to be stopped at in the walking process of the mobile robot is determined, so as to determine the second distance between the mobile robot and the target point to be walked to.

In a possible implementation of this application, step 101 may specifically include: when determining that the mobile robot needs to walk, for example, when a start signal for the mobile robot is generated, determining the first distance between the mobile robot and the target obstacle in the walking direction of the mobile robot and the second distance between the mobile robot and the target point to be walked to in the walking direction.

Step 102: Determine whether the first distance is greater than the second distance, and if yes, perform step 103; or if not, perform step 104.

Both the target obstacle and the target point to be walked to are located in a same walking direction of the mobile robot. Therefore, whether there is the target obstacle between the mobile robot and the target point to be walked to is determined by determining a magnitude relationship between the first distance and the second distance.

If the first distance is greater than the second distance, it indicates that there are no target obstacles between the mobile robot and the target point to be walked to. As shown in FIG. 2a, if a first distance d_obs between a mobile robot A and a target obstacle is greater than a second distance d_obj between the mobile robot A and the target point to be walked to, there are no target obstacles between the mobile robot A and the target point to be walked to, and the mobile robot A enters a non-obstacle avoidance state.

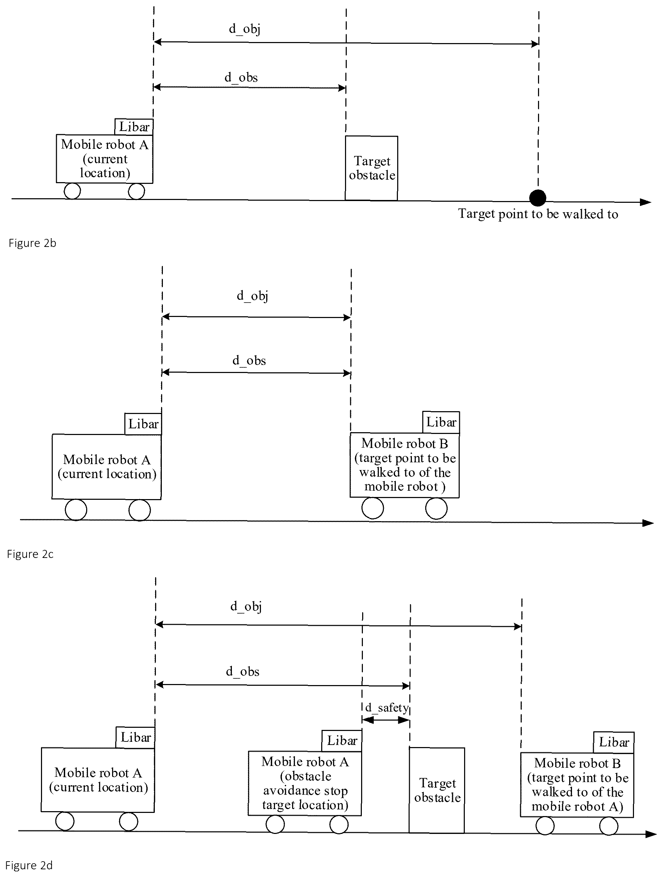

If the first distance is less than the second distance, it indicates that there is a target obstacle between the mobile robot and the target point to be walked to. As shown in FIG. 2b, if a first distance d_obs between a mobile robot A and a target obstacle is less than a second distance d_obj between the mobile robot A and the target point to be walked to, there is a target obstacle between the mobile robot A and the target point to be walked to, and the mobile robot A enters an obstacle avoidance state.

If the first distance is equal to the second distance, it indicates that there is a target obstacle at the target point to be walked to. As shown in FIG. 2c, there is a mobile robot B at a target point to be walked to in a walking direction of a mobile robot A, the mobile robot B is the target obstacle of the mobile robot A, a first distance d_obs between the mobile robot A and the target obstacle is equal to a second distance d_obj between the mobile robot A and the target point to be walked to, and the mobile robot A enters an obstacle avoidance state.

Step 103: Control the mobile robot to enter a non-obstacle avoidance state, to enable the mobile robot to walk, based on a non-obstacle avoidance walking strategy, to the target point to be walked to and then stop.

For methods for the mobile robot to walk, based on the non-obstacle avoidance walking strategy, to the target point to be walked to and then stop, in one manner, the management device may control, based on the non-obstacle avoidance walking strategy, the mobile robot to walk to the target point to be walked to and then stop; in another manner, after controlling the mobile robot to enter the non-obstacle avoidance state, the management device sends, to the mobile robot, a location of the target point to be walked to, and based on the non-obstacle avoidance walking strategy and the location of the target point to be walked to, the mobile robot walks to the target point to be walked to and then stops.

Specifically, in the non-obstacle avoidance walking strategy, the speed of the mobile robot may be planned and adjusted based on a target location of the target point to be walked to and a current state of the mobile robot, such as a current location, speed, or acceleration, so that the mobile robot can walk to the target point to be stopped at and stop. For a specific adjustment method of the non-obstacle avoidance walking strategy, a method in the related technology for a mobile robot to walk to a target point to be walked to without enabling an obstacle avoidance function may be referred to. Details are not described herein again.

Step 104: Control the mobile robot to enter an obstacle avoidance state, and control, based on an obstacle avoidance walking strategy, the mobile robot to walk to a target location spaced from the target obstacle by a preset safety distance and then stop.

The safety distance is a distance between the mobile robot and the target obstacle when the mobile robot stops. In this way, it can be ensured that the mobile robot does not touch the target obstacle, thereby ensuring the walking safety of the mobile robot.

As shown in FIG. 2d, the first distance d_obs between the mobile robot A and the target obstacle is less than the second distance d_obj between the mobile robot A and the target point to be walked to. By controlling the mobile robot A to enter the obstacle avoidance state, the mobile robot A is controlled, based on the obstacle avoidance walking strategy, to walk to the target location spaced from the target obstacle by a preset safety distance d_safety and then stop.

It may be understood that a sensing device LiDar is disposed on the mobile robot in FIG. 2a to FIG. 2d, and is configured to detect a target obstacle in the walking direction of the mobile robot.

In a possible implementation of this application, the obstacle avoidance control method for the mobile robot may further include the following steps:
(1.1) Generate a planned target point in the walking direction based on the first distance and the preset safety distance.
(1.2) Determine, every first specified time in a walking process of the mobile robot, whether a location change amount of the target obstacle reaches a preset change threshold, and if yes, update the planned target point based on the currently determined first distance and the preset safety distance; and
correspondingly, the controlling, based on an obstacle avoidance walking strategy, the mobile robot to walk to a target location spaced from the target obstacle by a preset safety distance includes:
   controlling, based on the obstacle avoidance walking strategy, the mobile robot to walk to the planned target point and then stop.

Specifically, when determining that the first distance is not greater than the second distance or when the mobile robot is controlled to enter the obstacle avoidance state, an initial planned target point may be generated in the walking direction based on the first distance between the mobile robot and the target obstacle and the preset safety distance, and the distance between the mobile robot and the planned target point may be a difference between the first distance and the preset safety distance.

When the mobile robot enters the obstacle avoidance state, the mobile robot may be controlled, based on the obstacle avoidance walking strategy, to walk to the initially planned target point, and in the walking process, the mobile robot detects the location of the target obstacle every specified time, to determine whether the location of the target obstacle changes.

Specifically, the first distance between the mobile robot and the target obstacle detected by the sensing device on the mobile robot may be obtained every first specified time, to calculate an actual location of the target obstacle based on the first distance and the current location of the mobile robot. The actual location may be understood as an absolute location of the target obstacle. In this way, the currently obtained actual location is compared with a neighboring actual location obtained last time, to determine a location change amount of the target obstacle.

However, to avoid fluctuation errors of the calculated location change amount of the target obstacle caused by a detection fluctuation of the sensing device and a fluctuation of the location of the mobile robot, in this application, a change threshold may be set, to determine whether the location change amount of the target obstacle is greater than the change threshold, and if yes, determine that the target obstacle actually moves in location, or if not, determine that the target obstacle does not move in location.

The first specified time is set based on an actual situation. For example, if the first specified time is 5s, the location of the target obstacle is detected every 5s, or the first specified time is set to be small enough to detect the location of the target obstacle in real time as far as possible.

If determining that the location of the target obstacle moves, the planned target point needs to be updated. Specifically, a difference between the currently determined first distance and the preset safety distance may be calculated, and the planned target point is updated based on the difference. The first distance is the distance between the mobile robot and the target obstacle. However, if determining that the location of the target obstacle does not move, the planned target point does not need to be updated, and the mobile robot is controlled to walk to the determined planned target point.

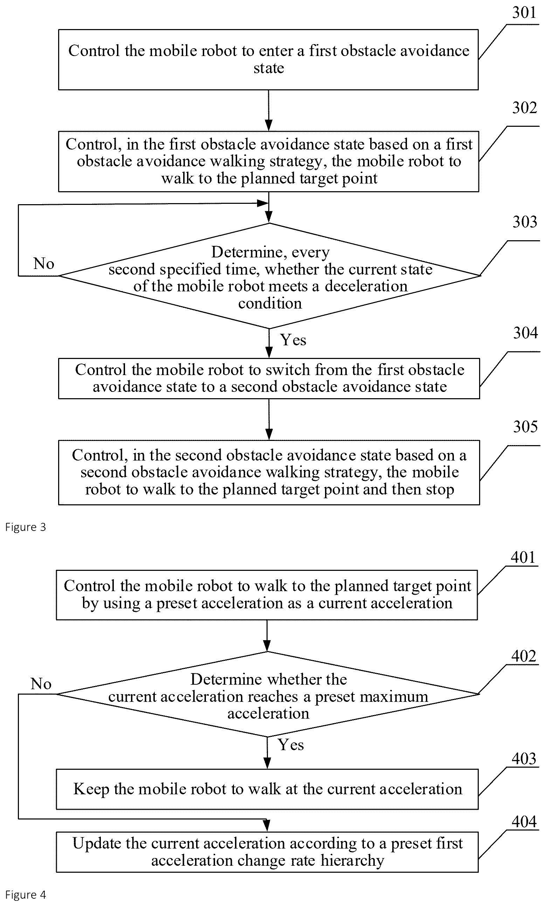

In some embodiments of this application, as shown in FIG. 3, the controlling the mobile robot to enter an obstacle avoidance state, and controlling, based on the obstacle avoidance walking strategy, the mobile robot to walk to the planned target point and then stop may include the following steps:
Step 301: Control the mobile robot to enter a first obstacle avoidance state.
Step 302: Control, in the first obstacle avoidance state based on a first obstacle avoidance walking strategy, the mobile robot to walk to the planned target point,
where in the first obstacle avoidance state, the mobile robot is in a state of walking in an accelerated manner and/or at a constant speed.
Step 303: Determine, every second specified time, whether the current state of the mobile robot meets a deceleration condition, and if yes, perform step 304; or if not, perform step 303.

The second specified time is set based on an actual situation. For example, if the second specified time is 5s, whether the current state of the mobile robot meets the deceleration condition is determined every 5s, or the second specified time is set to be small enough, to determine whether the current state of the mobile robot meets the deceleration condition in real time as far as possible.

Step 304: Control the mobile robot to switch from the first obstacle avoidance state to a second obstacle avoidance state.

Step 305: Control, in the second obstacle avoidance state based on a second obstacle avoidance walking strategy, the mobile robot to walk to the planned target point and then stop.

In the second obstacle avoidance state, the mobile robot is in a decelerated walking state.

In a possible implementation of this application, the controlling, based on a first obstacle avoidance walking strategy, the mobile robot to walk to the planned target point in step 302 may include: controlling the mobile robot to walk to the planned target point by using a preset acceleration as a current acceleration. Alternatively, the mobile robot is controlled to walk to the planned target point at a preset constant speed.

When the mobile robot is controlled to walk to the planned target point at the preset constant speed, the current acceleration of the mobile robot is zero, and the mobile robot is in a state of walking at a constant speed. When the mobile robot is controlled to walk to the planned target point at the preset acceleration, the mobile robot is in a state of walking in an accelerated manner.

When the mobile robot is controlled to walk in an accelerated manner, to prevent the mobile robot from rolling over due to an excessively rapid speed when the mobile robot walks in the accelerated manner, in some embodiments, the method may further include the following steps:
(2.1) In a process of controlling the mobile robot to walk to the planned target point by using the preset acceleration as the current acceleration, determine in real time whether a current speed of the mobile robot reaches a preset maximum speed.
(2.2) When the current speed of the mobile robot reaches the maximum speed, set the current acceleration to zero, and control the mobile robot to walk at the maximum speed.

It may be understood that a state of the mobile robot being controlled to walk at the maximum speed when the current acceleration is set zero is a state of the mobile robot walking at a constant speed.

(2.3) When the current speed of the mobile robot does not reach the maximum speed, continuously keep the mobile robot to walk at the current acceleration, and set the current acceleration to zero until the current speed reaches the maximum speed.

That is, the mobile robot may first walk in an accelerated manner, and when the current speed reaches the maximum speed, the acceleration is set to zero and the mobile robot walks constantly at the maximum speed. It may be understood that the mobile robot may be in a state of first walking in an accelerated manner and then at a constant speed.

In another possible implementation of this application, as shown in FIG. 4, the controlling, based on a first obstacle avoidance walking strategy, the mobile robot to walk to the planned target point in step 302 may include the following steps:
Step 401: Control the mobile robot to walk to the planned target point by using a preset acceleration as a current acceleration.
Step 402: Determine whether the current acceleration reaches a preset maximum acceleration, and if yes, perform step 403; or if not, perform step 404.
Step 403: Keep the mobile robot to walk at the current acceleration; and
when the mobile robot is maintained to walk at the current acceleration, the mobile robot is in a state of walking in an accelerated manner.
Step 404: Update the current acceleration according to a preset first acceleration change rate hierarchy.

A maximum value of the current acceleration is the maximum acceleration. The first acceleration change rate is used for gradually increasing the current acceleration of the mobile robot, and a time interval for increasing the current acceleration of the mobile robot may be flexibly set based on a time situation.

In this implementation, the preset maximum acceleration value may be flexibly set based on an actual case, and is not limited in this application.

However, to prevent the mobile robot from rolling over due to an excessively rapid speed when the mobile robot walks in the accelerated manner, in some embodiments, in the implementation shown in FIG. 4, the following steps may be further included:
(3.1) In a process of keeping the mobile robot to walk at the current acceleration or updating the current acceleration according to the preset first acceleration change rate hierarchy, determine, in real time, whether a current speed of the mobile robot reaches a preset maximum speed.
(3.2) When the current speed of the mobile robot reaches the maximum speed, set the current acceleration to zero, and control the mobile robot to walk at the maximum speed.

It may be understood that a state of the mobile robot being controlled to walk at the maximum speed when the current acceleration is set zero is a state of the mobile robot walking at a constant speed. It may be understood that the mobile robot is in a state of first walking in an accelerated manner and then at a constant speed.

(3.3) When the current speed of the mobile robot does not reach the maximum speed, continuously keep the mobile robot to walk at the current acceleration or continuously update the current acceleration according to the preset first acceleration change rate hierarchy, until the current speed reaches the maximum speed, and set the current acceleration to zero.

It can be seen that, in this application, by setting the maximum speed for the mobile robot, the speed of the mobile robot can be ensured not to exceed the maximum speed when the mobile robot walks in the accelerated manner, thereby ensuring the walking safety.

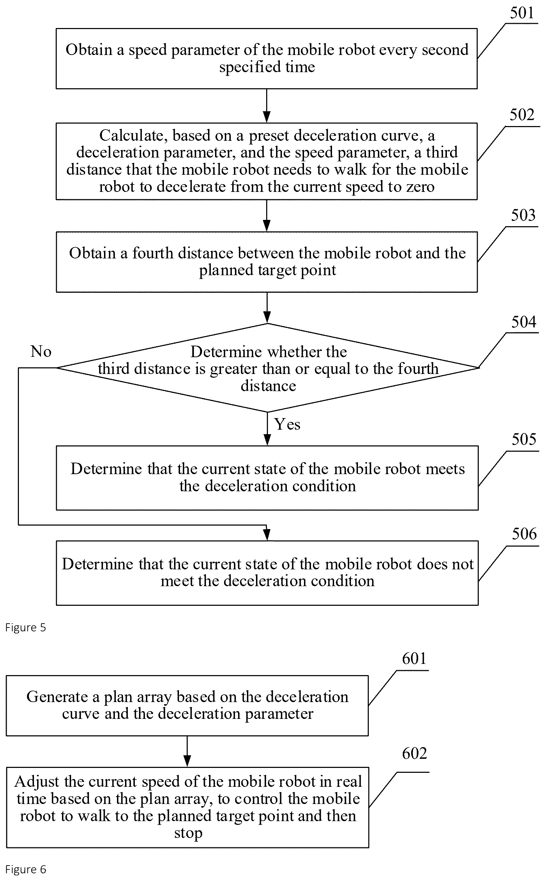

In some embodiments of this application, as shown in FIG. 5, the determining, every second specified time, whether a current state of the mobile robot meets a deceleration condition in step 303 may include the following steps:
Step 501: Obtain a speed parameter of the mobile robot every second specified time.
Step 502: Calculate, based on a preset deceleration curve, a deceleration parameter, and the speed parameter, a third distance that the mobile robot needs to walk for the mobile robot to decelerate from the current speed to zero.

The preset deceleration curve in this application may be a time-speed curve, or may be a time-distance curve. The deceleration parameter includes a change rate of the acceleration and/or a second acceleration. It should be noted that a value of the acceleration is a negative value, and the speed parameter includes the current speed and the current acceleration. Specifically, the third distance that the mobile robot needs to walk for the mobile robot to decelerate from the current speed to zero can be calculated based on the deceleration curve, the deceleration parameter, and the speed parameter.

Step 503: Obtain a fourth distance between the mobile robot and the planned target point.

The fourth distance is a difference between the first distance between the mobile robot and the target obstacle and the preset safety distance.

Step 504: Determine whether the third distance is greater than or equal to the fourth distance, and if yes, perform step 505; or if not, perform step 506.

Step 505: Determine that the current state of the mobile robot meets the deceleration condition.

Step 506: Determine that the current state of the mobile robot does not meet the deceleration condition.

By determining whether the current state of the mobile robot meets the deceleration condition, whether to control the mobile robot to switch from the first obstacle avoidance state to the second obstacle avoidance state is determined.

In some embodiments, as shown in FIG. 6, the controlling, based on a second obstacle avoidance walking strategy, the mobile robot to walk to the planned target point and then stop in step 305 may include the following steps:
Step 601: Generate a plan array based on the deceleration curve and the deceleration parameter.

The plan array is used for representing planned speeds and planned remaining distances to the planned target point at different moments.

Step 602: Adjust the current speed of the mobile robot in real time based on the plan array, to control the mobile robot to walk to the planned target point and then stop.

In a possible implementation in this application, a planned speed in the plan array at a current moment may be queried in real time, to control the mobile robot to use the planned speed as the current speed, and control the mobile robot to walk to a planned target point and then stop.

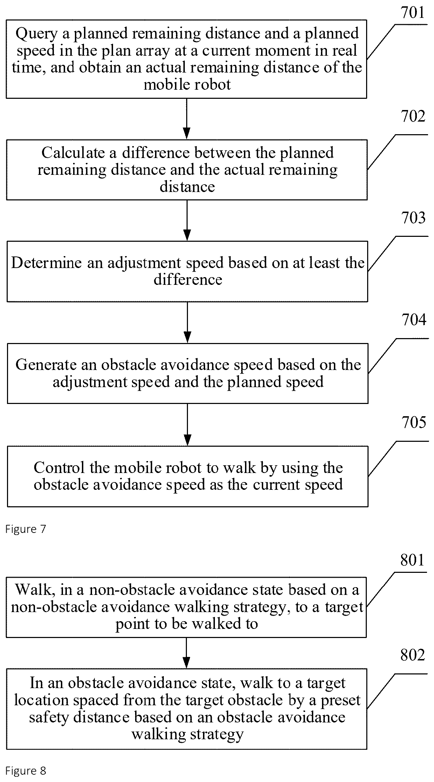

However, in a process of actually controlling the mobile robot to walk, if the target obstacle is a mobile robot ahead, when the mobile robot follows the target obstacle, the problems such as that the mobile robot cannot smoothly follow and the mobile robot cannot accurately stop at the planned target point may occur. To resolve the problem, in another possible implementation of this application, as shown in FIG. 7, the adjusting the current speed of the mobile robot in real time based on the plan array in step 602 may include the following steps:
Step 701: Query a planned remaining distance and a planned speed in the plan array at a current moment in real time, and obtain an actual remaining distance of the mobile robot.

The actual remaining distance is a distance between the mobile robot and the planned target point at the current moment, or it may be understood that the actual remaining distance is a difference between the first distance between the mobile robot and the target obstacle at the current moment and the preset safety distance.

Step 702: Calculate a difference between the planned remaining distance and the actual remaining distance.

Step 703: Determine an adjustment speed based on at least the difference.

In this application, an adjustment module is designed in advance. The adjustment module uses the difference between the planned remaining distance and the actual remaining distance as an input, and is configured to output an adjustment speed to reduce an error between the planned remaining distance and the actual remaining distance, so that walking of the mobile robot following the target obstacle can be smoothly implemented, and the mobile robot is ensured to be at the preset safety distance from the target obstacle when the mobile robot stops.

Specifically, a planned remaining distance in the plan array is set to d_plan, and a real-time remaining distance of the mobile robot d_real = d_obs - d_safety, where d_obs is the first distance between the mobile robot and the target obstacle, and d_safety is the preset safety distance.

Adjustment logic of the adjustment module is: v_dynamic(t) = Controller(d_err(t), d_err(t-1), ... d_err (t-N), v_dynamic(t-1), ... v_dynamic(t-N)),
where v_dynamic (t) is an adjustment speed at the current moment, d_err(t) is a planned remaining distance at the current moment, d_err(t-1) is a planned remaining distance at a previous moment, and d_err(t-N) is a planned remaining distance at a previous N moment; v_dynamic(t-1) is an adjustment speed at a previous moment, and v_dynamic(t-N) is an adjustment speed at the previous N moment.

Step 704: Generate an obstacle avoidance speed based on the adjustment speed and the planned speed.

The obstacle avoidance speed may be a sum of the planned speed and the adjustment speed.

Step 705: Control the mobile robot to walk by using the obstacle avoidance speed as the current speed.

The current speed of the mobile robot is adjusted in real time, so that the mobile robot can smoothly follow the target obstacle to walk, and the mobile robot is ensured to be at the preset safety distance with the target obstacle when the mobile robot stops.

To sum up, in the embodiments of this application, a management device determines a first distance between a mobile robot and a target obstacle in a walking direction of the mobile robot and a second distance between the mobile robot and a target point to be walked to in the walking direction, controls the mobile robot to enter a non-obstacle avoidance state when the first distance is greater than the second distance, to enable the mobile robot to walk, based on a non-obstacle avoidance walking strategy, to the target point to be walked to and then stop, controls the mobile robot to enter an obstacle avoidance state when the first distance is not greater than the second distance, and controls, based on an obstacle avoidance walking strategy, the mobile robot to walk to a target location spaced from a target obstacle by a preset safety distance and then stop. In this way, by using a magnitude relationship between the first distance and the second distance, whether the mobile robot enters the obstacle avoidance state is controlled, so as to ensure that when there is a target obstacle between the mobile robot and the target point to be walked to, the mobile robot can stop at a location spaced from the target obstacle by the safety distance, thereby reducing the collision risks of the mobile robot and improving the walking safety of the mobile robot.

Further, in the related technology, during actual application, it was further found by the inventors that, in a following walking scenario, due to the synchronism of start signals and the difference between responses of mobile robots, the mobile robots cannot walk completely synchronously, and there is a risk that a rear vehicle hits a front vehicle by a particular probability. For the defect, a solution used in a related technology is: controlling each mobile robot to upload a state (a location/speed) of the mobile robot, and obtaining a position/speed of a front vehicle to adjust the speed of the mobile robot, so as to implement following control, resulting in a large increase in the system complexity and a greatly increase in the communication load.

However, in this application, the management device can control the mobile robot to be in the first obstacle avoidance state, control the mobile robot to be in the second obstacle avoidance state when the deceleration condition is met, and control the mobile robot to walk based on the second obstacle avoidance walking strategy. In addition, the front vehicle can also be considered as the target obstacle, to achieve a following walking effect by using the obstacle avoidance walking strategy. This application implements synchronous walking of a plurality of mobile robots in a following walking scenario, which is controlled by a management device, and a mobile robot does not need to obtain states of other mobile robots, so that the system complexity is reduced.

An embodiment of this application further provides an obstacle avoidance control method for a mobile robot. The method is applied to a mobile robot. As shown in FIG. 8, the method may include the following steps:
Step 801: Walk, in a non-obstacle avoidance state based on a non-obstacle avoidance walking strategy, to a target point to be walked to.
Step 802: In an obstacle avoidance state, walk to a target location spaced from the target obstacle by a preset safety distance based on an obstacle avoidance walking strategy.

The mobile robot is controlled by a management device, and the management device is configured to: obtain a first distance between the mobile robot and the target obstacle in a walking direction and a second distance between the mobile robot and a target point to be walked to in the walking direction, determine whether the first distance is greater than the second distance, and if yes, control the mobile robot to enter the non-obstacle avoidance state; or if not, control the mobile robot to enter the obstacle avoidance state.

Corresponding to the foregoing embodiments of the foregoing method for implementing the application function, this application further provides an obstacle avoidance control apparatus and system for a mobile robot, an electronic device, and corresponding embodiments.

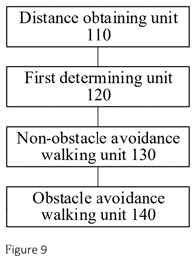

FIG. 9 is a schematic structural diagram of an obstacle avoidance control apparatus for a mobile robot according to an embodiment of this application. The apparatus may be applied to a management device. As shown in FIG. 9, the apparatus may include: a distance obtaining unit 110, a first determining unit 120, a non-obstacle avoidance walking unit 130, and an obstacle avoidance walking unit 140, where:
the distance obtaining unit 110 is configured to determine a first distance between a mobile robot and a target obstacle in a walking direction of the mobile robot and a second distance between the mobile robot and a target point to be walked to in the walking direction;
the first determining unit 120 is configured to determine whether the first distance is greater than the second distance;
the non-obstacle avoidance walking unit 130 is configured to: when the first distance is greater than the second distance, control the mobile robot to enter a non-obstacle avoidance state, to enable the mobile robot to walk, based on a non-obstacle avoidance walking strategy, to the target point to be walked to; and
the obstacle avoidance walking unit 140 is configured to: when the first distance is not greater than the second distance, control the mobile robot to enter an obstacle avoidance state, and control, based on an obstacle avoidance walking strategy, the mobile robot to walk to a target location spaced from the target obstacle by a preset safety distance and then stop.

In some embodiments, the apparatus further includes:
a target point generating unit, configured to generate a planned target point in the walking direction based on the first distance and the preset safety distance;
a determining and updating unit, configured to determine, every first specified time in a walking process of the mobile robot, whether a location change amount of the target obstacle reaches a preset change threshold, and if yes, update the planned target point based on the currently determined first distance and the preset safety distance; and
correspondingly, the controlling, based on an obstacle avoidance walking strategy, the mobile robot to walk to a target location spaced from the target obstacle by a preset safety distance includes:
   controlling, based on the obstacle avoidance walking strategy, the mobile robot to walk to the planned target point and then stop.

In some embodiments, the obstacle avoidance walking unit includes:
a first control module, configured to: when the first distance is not greater than the second distance, control the mobile robot to enter a first obstacle avoidance state; and
a first walking control module, configured to control, in the first obstacle avoidance state based on a first obstacle avoidance walking strategy, the mobile robot to walk to the planned target point,
where in the first obstacle avoidance state, the mobile robot is in a state of walking in an accelerated manner and/or at a constant speed;
a deceleration determining module, configured to determine, every second specified time, whether the current state of the mobile robot meets a deceleration condition;
a state switching module, configured to: when a deceleration condition is met, control the mobile robot to switch from the first obstacle avoidance state to a second obstacle avoidance state; and
a second walking control module, configured to control, in the second obstacle avoidance state based on a second obstacle avoidance walking strategy, the mobile robot to walk to the planned target point and then stop,
where in the second obstacle avoidance state, the mobile robot is in a decelerated walking state.

In some embodiments, the first walking control module is specifically configured to: control the mobile robot to walk to the planned target point by using a preset acceleration as a current acceleration, and determine whether the current acceleration reaches a preset maximum acceleration; and if yes, keep the mobile robot to walk at the current acceleration; or if not, update the current acceleration according to a preset first acceleration change rate hierarchy, where a maximum value of the current acceleration is the maximum acceleration.

In some embodiments, the first walking control module is further configured to: in a process of keeping the mobile robot to walk at the current acceleration or updating the current acceleration according to the preset first acceleration change rate hierarchy, determine, in real time, whether a current speed of the mobile robot reaches a preset maximum speed; and if yes, set the current acceleration to zero, and control the mobile robot to walk at the maximum speed; or if not, continuously keep the mobile robot to walk at the current acceleration or continuously update the current acceleration according to the preset first acceleration change rate hierarchy, until the current speed reaches the maximum speed, and set the current acceleration to zero.

In some embodiments, the deceleration determining module is specifically configured to obtain a speed parameter of the mobile robot every second specified time, where the speed parameter includes a current speed and a current acceleration; calculate, based on a preset deceleration curve, a deceleration parameter, and the speed parameter, a third distance that the mobile robot needs to walk to decelerate from the current speed to zero; obtain a fourth distance between the mobile robot and the planned target point; and determine whether the third distance is greater than or equal to the fourth distance, and if yes, determine that the current state of the mobile robot meets the deceleration condition, or if not, determine that the current state of the mobile robot does not meet the deceleration condition.

In some embodiments, the second walking control module is specifically configured to: generate a plan array based on the deceleration curve and the deceleration parameter, and adjust the current speed of the mobile robot in real time based on the plan array, to control the mobile robot to walk to the planned target point and then stop.

The plan array is used for representing planned speeds and planned remaining distances to the planned target point at different moments.

In some embodiments, the adjusting the current speed of the mobile robot in real time based on the plan array includes: querying a planned remaining distance and a planned speed in the plan array at a current moment in real time, and obtaining an actual remaining distance of the mobile robot; calculating a difference between the planned remaining distance and the actual remaining distance, determining an adjustment speed based on at least the difference; generating an obstacle avoidance speed based on the adjustment speed and the planned speed; and controlling the mobile robot to walk by using the obstacle avoidance speed as the current speed.

The actual remaining distance is a distance between the mobile robot and the planned target point at the current moment.

This embodiment further provides an obstacle avoidance control apparatus for a mobile robot, applied to a mobile robot. The apparatus may include a non-obstacle avoidance walking unit and an obstacle avoidance walking unit, where:
the non-obstacle avoidance walking unit is configured to: walk, in a non-obstacle avoidance state based on a non-obstacle avoidance walking strategy, to a target point to be walked to; and
the obstacle avoidance walking unit is configured to: in an obstacle avoidance state, walk to a target location spaced from the target obstacle by a preset safety distance based on an obstacle avoidance walking strategy.

The mobile robot is controlled by a management device, and the management device is configured to: obtain a first distance between the mobile robot and the target obstacle in a walking direction and a second distance between the mobile robot and a target point to be walked to in the walking direction, determine whether the first distance is greater than the second distance, and if yes, control the mobile robot to enter the non-obstacle avoidance state; or if not, control the mobile robot to enter the obstacle avoidance state.

An embodiment of this application further provides a management device, including:
a processor; and
a memory, storing executable code, the executable code, when executed by the processor, causing the processor to perform the obstacle avoidance control method for a mobile robot described in the foregoing embodiments.

An embodiment of this application further provides a mobile robot, including:
a processor; and
a memory, storing executable code, the executable code, when executed by the processor, causing the processor to perform the obstacle avoidance control method for a mobile robot described in the foregoing embodiments.

In some embodiments, the mobile robot further includes:
a sensing device, configured to detect a target obstacle in a walking direction of the mobile robot.

An embodiment of this application further provides an obstacle avoidance control system. The system includes: a management device and at least one mobile robot.

For specific implementations of the management device and the mobile robot, the foregoing embodiments may be referred to.

In some embodiments, when at least two mobile robots are included, the at least two mobile robots are in a following walking scenario.

Regarding the apparatus in the foregoing embodiments, the specific manner in which the modules perform operations has been described in detail in the embodiments of the method, and is not repeatedly described in detail herein.

The foregoing described processor may be a central processing unit (Central Processing Unit, CPU), or may be another general-purpose processor, a digital signal processor (Digital Signal Processor, DSP), an application specific integrated circuit (Application Specific Integrated Circuit, ASIC), a field-programmable gate array (Field-Programmable Gate Array, FPGA), or another programmable logic device, discrete gate, or transistor logic device, discrete hardware component, or the like. The general-purpose processor may be a microprocessor, or the processor may be any conventional processor or the like.

The foregoing described memory may include various types of storage units, such as a system memory, a read-only memory (ROM), and a permanent storage apparatus. The ROM may store static data or an instruction needed by the processor or another module of a computer. The permanent storage apparatus may be a read-write storage apparatus. The permanent storage apparatus may be a non-volatile storage device that does not lose stored instructions and data even after the computer is powered down. In some implementations, the permanent storage apparatus uses a large-capacity storage apparatus (for example, a magnetic or optical disc, or a flash memory) as the permanent storage apparatus. In some other implementations, the permanent storage apparatus may be a removable storage device (for example, a floppy disk or an optical drive). The system memory may be a read-write storage device or a volatile read-write storage device, for example, a dynamic random access memory. The system memory may store some or all instructions and data needed by the processor during running. In addition, the memory may include any combination of computer-readable storage media, including various types of semiconductor memory chips (DRAM, SRAM, SDRAM, flash memory, and programmable read-only memory), and a magnetic disk and/or an optical disc may alternatively be used. In some implementations, the memory may include a removable storage device that can be read and/or written, such as a compact disc (CD), a read-only digital versatile disc (such as a DVD-ROM or a double-layer DVD-ROM), a read-only blu-ray disc, an ultra-density optical disc, a flash memory card (for example, an SD card, a min SD card, or a Micro-SD card), or a magnetic floppy disk. The computer-readable storage medium does not include a carrier and an instant electronic signal transmitted through wireless or wired transmission.

The memory stores executable code, and when the executable code is processed by the processor, the processor may be caused to perform some or all of the foregoing method.

The solutions of this application have been described in detail above with reference to the accompanying drawings. In the foregoing embodiments, description of each embodiment focuses on a different part, and for parts that are not described in detail in one embodiment, reference may be made to the related description of other embodiments. It should be further appreciated by a person skilled in the art that the actions and modules involved in the specification are not necessarily required by this application. In addition, it may be understood that, a sequence of the steps in the method of the embodiments of this application may be adjusted, combined, or deleted according to an actual requirement, and the modules in the apparatus of the embodiments of this application may be combined, divided, or deleted according to an actual requirement.

In addition, the method according to this application may further be implemented as a computer program or a computer program product. The computer program or computer program product includes computer program code instructions used for performing some or all of the steps of the foregoing method of this application.

Alternatively, this application may alternatively be implemented as a non-transitory machine readable storage medium (or a computer-readable storage medium, or a machine readable storage medium). Executable code (or a computer program, or computer instruction code) is stored on the non-transitory machine readable storage medium. When the executable code (or the computer program, or the computer instruction code) is executed by a processor of an electronic device (or an electronic device, a server, or the like), the processor is caused to perform some or all of the steps of the foregoing method according to this application.

A person skilled in the art would further understand that various exemplary logical blocks, modules, circuits, and algorithm steps described with reference to this application may be implemented as electronic hardware, computer software, or a combination of the electronic hardware and the computer software.

The flowcharts and block diagrams in the accompanying drawings illustrate the system architecture, functionality, and operation of possible implementations of systems and methods according to a plurality of embodiments of this application. In this regard, each box in a flowchart or a block diagram may represent a module, a program segment, or a part of code. The module, the program segment, or the part of code includes one or more executable instructions used for implementing designated logic functions. It should also be noted that in some implementations used as substitutes, functions annotated in boxes may alternatively occur in a sequence different from that annotated in an accompanying drawing. For example, actually two boxes shown in succession may be performed basically in parallel, and sometimes the two boxes may be performed in a reverse sequence. This is determined by a related function. It should also be noted that, each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

The embodiments of this application have been described above. The foregoing description is exemplary, not exhaustive, and is not limited to the disclosed embodiments. Many modifications and changes are obvious to a person of ordinary skill in the art without departing from the scope and spirit of the described embodiments. The terms used in this specification are chosen to best explain principles of the embodiments, actual applications, or technical improvements in the market, or enable a person of ordinary skill in the art to understand the embodiments disclosed in this specification.

## Claims

1. An obstacle avoidance control method for a mobile robot, applied to a management device, comprising:
determining a first distance between a mobile robot and a target obstacle in a walking direction of the mobile robot and a second distance between the mobile robot and a target point to be walked to in the walking direction;
determining whether the first distance is greater than the second distance, and if yes, controlling the mobile robot to enter a non-obstacle avoidance state, to enable the mobile robot to walk, based on a non-obstacle avoidance walking strategy, to the target point to be walked to and then stop; or
if not, controlling the mobile robot to enter an obstacle avoidance state, and controlling, based on an obstacle avoidance walking strategy, the mobile robot to walk to a target location spaced from the target obstacle by a preset safety distance and then stop.

2. The method according to claim 1, further comprising:
generating a planned target point in the walking direction based on the first distance and the preset safety distance;
determining, every first specified time in a walking process of the mobile robot, whether a location change amount of the target obstacle reaches a preset change threshold, and if yes, updating the planned target point based on the currently determined first distance and the preset safety distance; and
correspondingly, the controlling , based on an obstacle avoidance walking strategy, the mobile robot to walk to a target location spaced from the target obstacle by a preset safety distance comprising:
controlling, based on the obstacle avoidance walking strategy, the mobile robot to walk to the planned target point and then stop.

3. The method according to claim 2, wherein the controlling the mobile robot to enter an obstacle avoidance state, and controlling, based on an obstacle avoidance walking strategy, the mobile robot to walk to the planned target point and then stop comprise:
controlling the mobile robot to enter a first obstacle avoidance state;
controlling, in the first obstacle avoidance state based on a first obstacle avoidance walking strategy, the mobile robot to walk to the planned target point, wherein in the first obstacle avoidance state, the mobile robot is in a state of walking in an accelerated manner and/or at a constant speed;
determining , every second specified time, whether the current state of the mobile robot meets a deceleration condition, and if yes, controlling the mobile robot to switch from the first obstacle avoidance state to a second obstacle avoidance state; and
controlling, in the second obstacle avoidance state based on a second obstacle avoidance walking strategy, the mobile robot to walk to the planned target point and then stop,
wherein in the second obstacle avoidance state, the mobile robot is in a decelerated walking state.

4. The method according to claim 3, wherein the controlling , based on a first obstacle avoidance walking strategy, the mobile robot to walk to the planned target point comprises:
controlling the mobile robot to walk to the planned target point by using a preset acceleration as a current acceleration, and determining whether the current acceleration reaches a preset maximum acceleration; and
if yes, keeping the mobile robot to walk at the current acceleration; or
if not, updating the current acceleration according to a preset first acceleration change rate hierarchy, wherein a maximum value of the current acceleration is the maximum acceleration.

5. The method according to claim 4, further comprising:
in a process of keeping the mobile robot to walk at the current acceleration or updating the current acceleration according to the preset first acceleration change rate hierarchy, determining, in real time, whether a current speed of the mobile robot reaches a preset maximum speed; and
if yes, setting the current acceleration to zero, and controlling the mobile robot to walk at the maximum speed; or
if not, continuously keeping the mobile robot to walk at the current acceleration or continuously updating the current acceleration according to the preset first acceleration change rate hierarchy, until the current speed reaches the maximum speed, and setting the current acceleration to zero.

6. The method according to claim 3, wherein the determining, every second specified time, whether the current state of the mobile robot meets a deceleration condition comprises:
obtaining a speed parameter of the mobile robot every second specified time, wherein the speed parameter comprises a current speed and a current acceleration;
calculating , based on a preset deceleration curve, a deceleration parameter, and the speed parameter, a third distance that the mobile robot needs to walk to decelerate from the current speed to zero;
obtaining a fourth distance between the mobile robot and the planned target point; and
determining whether the third distance is greater than or equal to the fourth distance, and if yes, determining that the current state of the mobile robot meets the deceleration condition, or if not, determining that the current state of the mobile robot does not meet the deceleration condition.

7. The method according to claim 6, wherein the controlling, based on a second obstacle avoidance walking strategy, the mobile robot to walk to the planned target point and then stop comprises:
generating a plan array based on the deceleration curve and the deceleration parameter, wherein the plan array is used for representing planned speeds and planned remaining distances to the planned target point at different moments; and
adjusting the current speed of the mobile robot in real time based on the plan array, to control the mobile robot to walk to the planned target point and then stop.

8. The method according to claim 7, wherein the adjusting the current speed of the mobile robot in real time based on the plan array comprises:
querying a planned remaining distance and a planned speed in the plan array at a current moment in real time, and obtaining an actual remaining distance of the mobile robot;
calculating a difference between the planned remaining distance and the actual remaining distance, wherein the actual remaining distance is a distance between the mobile robot and the planned target point at the current moment;
determining an adjustment speed based on at least the difference;
generating an obstacle avoidance speed based on the adjustment speed and the planned speed; and
controlling (705) the mobile robot to walk by using the obstacle avoidance speed as the current speed.

9. An obstacle avoidance control method for a mobile robot, applied to a mobile robot, the method comprising:
Walking, in a non-obstacle avoidance state based on a non-obstacle avoidance walking strategy, to a target point to be walked to; and
in an obstacle avoidance state, walking to a target location spaced from the target obstacle by a preset safety distance based on an obstacle avoidance walking strategy,
wherein the mobile robot is controlled by a management device, and the management device is configured to: obtain a first distance between the mobile robot and the target obstacle in a walking direction and a second distance between the mobile robot and a target point to be walked to in the walking direction, determine whether the first distance is greater than the second distance, and if yes, control the mobile robot to enter the non-obstacle avoidance state; or if not, control the mobile robot to enter the obstacle avoidance state.

10. An obstacle avoidance control apparatus for a mobile robot, applied to a device, the apparatus comprising:
a distance obtaining unit, configured to determine a first distance between a mobile robot and a target obstacle in a walking direction of the mobile robot and a second distance between the mobile robot and a target point to be walked to in the walking direction;
a first determining unit, configured to determine whether the first distance is greater than the second distance;
a non-obstacle avoidance walking unit, configured to: when the first distance is greater than the second distance, control the mobile robot to enter a non-obstacle avoidance state, to enable the mobile robot to walk, based on a non-obstacle avoidance walking strategy, to the target point to be walked to; and
an obstacle avoidance walking unit, configured to: when the first distance is not greater than the second distance, control the mobile robot to enter an obstacle avoidance state, and control, based on an obstacle avoidance walking strategy, the mobile robot to walk to a target location spaced from the target obstacle by a preset safety distance and then stop.

11. A management device, comprising:
a processor; and
a memory, storing executable code, the executable code, when executed by the processor, causing the processor to perform the method according to any one of the claims 1 to 8.

12. A mobile robot, comprising:
a processor; and
a memory, storing executable code, the executable code, when executed by the processor, causing the processor to perform the method according to claim 9.

13. The mobile robot according to claim 12, further comprising:
a sensing device, configured to detect a target obstacle in a walking direction of the mobile robot.

14. An obstacle avoidance control system, comprising:
the management device according to claim 11; and
at least one mobile robot.

15. The system according to claim 14, wherein when at least two mobile robots are comprised, the at least two mobile robots are in a following walking scenario.

16. A non-transitory machine readable storage medium, storing executable code, the executable code, when executed by a processor of an electronic device, causing the processor to perform the method according to any one of claims 1 to 8.
